# EUROPÄISCHE PATENTSCHRIFT

(11) **EP 4 277 815 B1**
(45) Veröffentlichungstag und Bekanntmachung des Hinweises auf die Patenterteilung: **07.01.2026**
(21) Anmeldenummer: 21802691.2
(22) Anmeldetag: 02.11.2021
(51) Int. Cl.: B60T 8/17, B60W 30/18

(54) **VERFAHREN UND VORRICHTUNG ZUM STABILISIEREN EINES ZWEIRÄDRIGEN ODER DREIRÄDRIGEN FAHRZEUGS WÄHREND EINER REKUPERATION**
DEVICE AND METHOD FOR STABILISING A TWO-WHEELED OR THREE-WHEELED VEHICLE DURING REGENERATION
DISPOSITIF ET PROCÉDÉ POUR STABILISER UN VÉHICULE À DEUX ROUES OU À TROIS ROUES PENDANT LA RÉGÉNÉRATION

(30) Priorität: 18.01.2021 DE 102021100850
(43) Veröffentlichungstag der Anmeldung: 22.11.2023
(73) Patentinhaber: Robert Bosch GmbH, 70442 Stuttgart (DE)
(72) Erfinder: KRETSCHMER, Markus, 71636 Ludwigsburg (DE); STEINERT, Alexander, 71636 Ludwigsburg (DE)
(86) Internationale Anmeldenummer: PCT/EP2021/080320
(87) Internationale Veröffentlichungsnummer: WO 2022/152425

(56) Entgegenhaltungen:
- WO-A1-2016/203452
- DE-A1- 102013 223 625
- DE-T5- 112016 002 738
- US-A1- 2003 169 002

## Beschreibung

### Gebiet der Erfindung

Die Erfindung betrifft ein Verfahren zum Stabilisieren eines Rads eines zweirädrigen oder dreirädrigen Fahrzeugs während einer Rekuperation sowie eine entsprechende Vorrichtung.

### Stand der Technik

Ein Fahrzeug kann außer Kontrolle geraten, wenn ein oder mehrere Räder des Fahrzeugs seine Bodenhaftung verlieren. Die Räder können beispielsweise beim Bremsen blockieren und die Bodenhaftung verlieren. Dann können auch Seitenführungskräfte nur noch sehr eingeschränkt übertragen werden.

Um dies zu verhindern kann das Fahrzeug mit einem Anti-Blockier-System ausgestattet werden. Das Anti-Blockier-System überwacht über Geschwindigkeitssensoren an den Rädern Radgeschwindigkeiten der Räder und steuert beispielsweise ein pulsierendes Lösen individueller Radbremsen an, um die mit dem Blockieren beginnenden Räder wieder zu beschleunigen und Bodenhaftung zu erhalten.

Bei elektrisch angetriebenen Fahrzeugen wird versucht, in möglichst vielen Situationen elektrisch zu bremsen, um elektrische Energie zurückzugewinnen. Das elektrische Bremsen kann als Rekuperation bezeichnet werden. Beim elektrischen Bremsen werden angetriebene Räder des Fahrzeugs durch den Antriebsmotor abgebremst. Auch bei der Rekuperation können die gebremsten Räder blockieren. Dies trifft insbesondere für zweirädrige oder dreirädrige Fahrzeuge wie z.B. Scooter, Roller oder ähnlichem zu.

Ein Beispiel einer Begrenzung der Dynamik des Antriebsstrangs eines elektrischen Fahrzeugs ist aus DE 10 2013 223 625 A1 bekannt.

### Offenbarung der Erfindung

Vor diesem Hintergrund werden mit dem hier vorgestellten Ansatz ein Verfahren zum Stabilisieren eines Rads eines zweirädrigen oder dreirädrigen Fahrzeugs während einer Rekuperation und eine entsprechende Vorrichtung, sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

Bei einem zweirädrigen oder dreirädrigen Fahrzeug mit elektrischem Antrieb wird oft ein direkt mit dem Rad gekoppelter Elektromotor verwendet. Durch die direkte Kopplung folgt eine Drehzahl des Elektromotors unmittelbar einer Drehzahl des gekoppelten Rads. Da eine Steuerungselektronik des Elektromotors zum Ansteuern des Elektromotors eine aktuelle Lage eines Rotors des Elektromotors überwacht, ist auch eine aktuelle Beschleunigung beziehungsweise Verzögerung des Rotors bekannt.

### Vorteile der Erfindung

Ausführungsformen der vorliegenden Erfindung können in vorteilhafter Weise ermöglichen, bei einem elektrisch angetriebenen zweirädrigen oder dreirädrigen Fahrzeug ohne einen eigenen Drehzahlsensor am Rad eine Anti-Blockier-Funktionalität bereitzustellen. Durch den Verzicht auf zusätzliche Sensorik kann die Funktionalität mit geringen Zusatzkosten umgesetzt werden.

Es wird ein Verfahren zum Stabilisieren eines Rads eines zweirädrigen oder dreirädrigen Fahrzeugs während einer Rekuperation vorgeschlagen, wobei unter Verwendung eines Drehzahlgradienten eines rekuperierenden Antriebsmotors des Rads ein Skalierungsfaktor für ein Rekuperationsmoment des Antriebsmotors aus einer Rekuperationskennlinie ausgelesen wird und das Rekuperationsmoment unter Verwendung des Skalierungsfaktors eingestellt wird, um das Rad beziehungsweise das Fahrzeug zu stabilisieren.

Ideen zu Ausführungsformen der vorliegenden Erfindung können unter anderem als auf den nachfolgend beschriebenen Gedanken und Erkenntnissen beruhend angesehen werden.

Ein zweirädriges oder dreirädriges Fahrzeug kann ein elektrisch angetriebener Scooter sein. Das Fahrzeug kann unter Verwendung von einfachen Komponenten aufgebaut sein und kann kostengünstig hergestellt werden. Ein Antriebsmotor kann ein Radnabenmotor oder ein zentral in einem Chassis des Fahrzeugs angeordneter Elektromotor sein. Der Antriebsmotor kann über eine feste Übersetzung mit dem Rad gekoppelt sein. Der Antriebsmotor kann das Rad antreiben und abbremsen, also beschleunigen und verzögern. Während einer Rekuperation wird das Rad durch ein von dem Antriebsmotor aufgebrachtes Rekuperationsmoment verzögert und der Antriebsmotor erzeugt als Generator elektrischen Strom aus einer Bewegungsenergie des Fahrzeugs. Das Rekuperationsmoment ist ein einer Bewegung des Fahrzeugs entgegen gerichtetes Drehmoment des Antriebsmotors. Über das Rekuperationsmoment kann eingestellt werden, wie stark das Fahrzeug abgebremst werden soll.

Ein Drehzahlgradient kann ein Maß für das Verzögern sein, also wie stark das Rad sich beim Abbremsen verlangsamt. Wenn der Drehzahlgradient plötzlich ansteigt, das Rad also sehr schnell langsamer wird, fängt das Rad mit einer hohen Wahrscheinlichkeit an zu blockieren. Um das Blockieren zu unterbinden, kann das Rekuperationsmoment reduziert werden. Das Rekuperationsmoment kann unter Verwendung eines Skalierungsfaktors reduziert werden. Der Skalierungsfaktor kann mit einem ursprünglich gewünschten Rekuperationsmoment multipliziert werden. Der Skalierungsfaktor kann einen Wertebereich zwischen null und eins aufweisen. Das Rekuperationsmoment kann zyklisch reduziert werden. Beispielsweise kann das Rekuperationsmoment jeweils für 30 Millisekunden bis 50 Millisekunden oder aber für die Dauer der Radblockade reduziert werden. Anschließend kann das Rekuperationsmoment wieder erhöht werden und der Prozess von vorne beginnen.

Es kann damit begonnen werden, den Skalierungsfaktor zu verwenden, wenn eine Fahrzeuggeschwindigkeit des Fahrzeugs größer als eine Stabilisierungsgeschwindigkeit wird. Es kann damit aufgehört werden, den Skalierungsfaktor zu verwenden, wenn die Fahrzeuggeschwindigkeit kleiner als eine Schrittgeschwindigkeit wird. Die Stabilisierungsgeschwindigkeit ist größer als die Schrittgeschwindigkeit. Durch die Schrittgeschwindigkeit und die Stabilisierungsgeschwindigkeit kann eine Geschwindigkeitshysterese definiert sein. Durch die Geschwindigkeitshysterese kann ein instabiler Zustand rund um eine einzelne Aktivierungsgeschwindigkeit beziehungsweise Deaktivierungsgeschwindigkeit vermieden werden. Die Schrittgeschwindigkeit kann beispielsweise 4 km/h oder weniger betragen. Die Stabilisierungsgeschwindigkeit kann beispielsweise 8 km/h oder mehr betragen. Die Schrittgeschwindigkeit und die Stabilisierungsgeschwindigkeit können sich beispielsweise um mindestens 2 km/h, vorzugsweise mindestens 4 km/h, voneinander unterscheiden. Damit kann bei den genannten beispielhaften Werten begonnen werden, den Skalierungsfaktor zu verwenden, wenn die Fahrzeuggeschwindigkeit von 7 km/h auf 8 km/h steigt, während aufgehört werden kann, den Skalierungsfaktor zu verwenden, wenn die Fahrzeuggeschwindigkeit von 5 km/h auf 4 km/h sinkt.

Unter Verwendung der Fahrzeuggeschwindigkeit kann die Rekuperationskennlinie aus einem Rekuperationskennfeld ausgewählt werden. Der Skalierungsfaktor kann unter Verwendung des Drehzahlgradienten aus der ausgewählten Rekuperationskennlinie ausgelesen werden. Ein Rekuperationskennfeld kann mehrere Rekuperationskennlinien für unterschiedliche Fahrzeuggeschwindigkeiten umfassen. Je nach Fahrzeuggeschwindigkeit kann eine angepasste Rekuperationskennlinie verwendet werden. Damit kann ein Ansprechverhalten des hier vorgestellten Verfahrens geschwindigkeitsabhängig optimiert werden.

Die Fahrzeuggeschwindigkeit kann von einem Satellitennavigationssystem des Fahrzeugs eingelesen werden. Das Satellitennavigationssystem kann auch Bestandteil eines mit dem Fahrzeug gekoppelten Mobilgeräts sein. Insbesondere Scooter können zu Abrechnungszwecken mittels eines Mobilgeräts aktiviert werden. Dadurch kann ein Geschwindigkeitssignal direkt zur Verfügung stehen.

Alternativ kann auch ein dezidierter Geschwindigkeitssensor des Fahrzeugs verwendet werden, um ein die Fahrzeuggeschwindigkeit repräsentierendes Geschwindigkeitssignal bereitzustellen.

Die Fahrzeuggeschwindigkeit kann auch aus einer Drehzahl des Antriebsmotors abgeleitet werden. Aufgrund der festen Übersetzung des Direktantriebs besteht eine Koppelung der Drehzahl an die Fahrzeuggeschwindigkeit. Die Drehzahl kann von der Steuerungselektronik des Antriebsmotors über eine Schnittstelle bereitgestellt werden.

Die Drehzahl kann unter Verwendung eines Winkelsignals des Antriebsmotors bestimmt werden. Der Antriebsmotor kann standardmäßig mit einem Rotorlagegeber ausgestattet sein. Die Steuerungselektronik des Antriebsmotors kann den Rotor des Antriebsmotors lagegeregelt ansteuern. Das Winkelsignal kann von dem Rotorlagegeber bereitgestellt werden und direkt abgegriffen werden. Das Winkelsignal kann differenziert werden, um die Drehzahl zu erhalten.

Der Drehzahlgradient kann aus der Drehzahl abgeleitet werden. Die Drehzahl kann differenziert werden, um den Drehzahlgradient zu erhalten.

Die Rekuperationskennlinie kann in einer Tabelle als Abfolge von Stützstellen hinterlegt sein. Zum Auslesen des Skalierungsfaktors kann zwischen den Stützstellen interpoliert werden. Die Tabelle kann wenig Speicherplatz beanspruchen. Durch Interpolation können Zwischenwerte mit einer ausreichend hohen Genauigkeit erzeugt werden. Beispielsweise kann zwischen zwei Stützstellen linear interpoliert werden.

Das Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die dazu ausgebildet ist, um die Schritte einer Variante des hier vorgestellten Verfahrens in entsprechenden Einrichtungen durchzuführen, anzusteuern bzw. umzusetzen.

Die Vorrichtung kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

### Kurze Beschreibung der Zeichnung

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Fahrzeugs mit einer Vorrichtung zum Stabilisieren gemäß einem Ausführungsbeispiel;
Fig. 2 zeigt ein Ablaufdiagramm einer weiteren Umsetzung eines Verfahrens zum Stabilisieren gemäß einem Ausführungsbeispiel;
Fig. 3 zeigt eine Darstellung einer Fahrsituation gemäß einem Ausführungsbeispiel; und
Fig. 4 zeigt eine Detaildarstellung einer Fahrsituation gemäß einem Ausführungsbeispiel.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

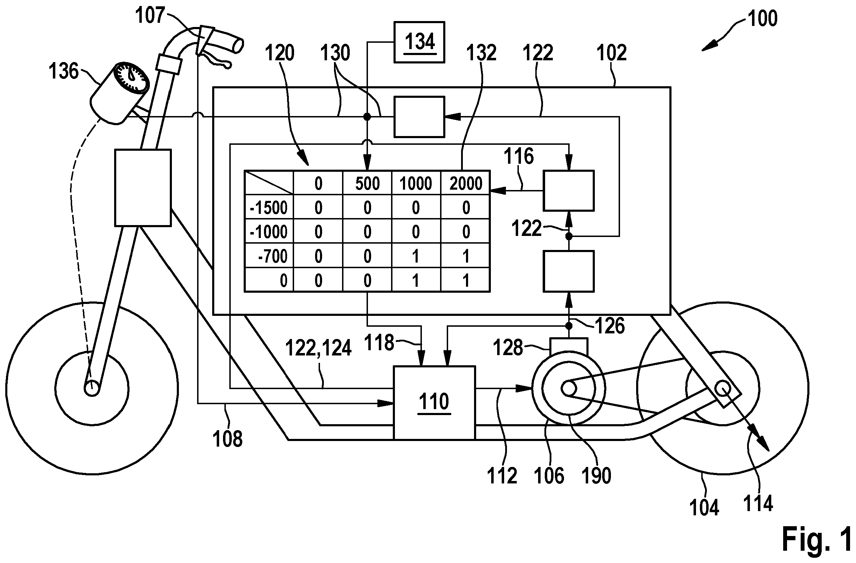

Fig. 1 zeigt eine Darstellung eines Fahrzeugs 100 mit einer Vorrichtung 102 zum Stabilisieren gemäß einem Ausführungsbeispiel. Die Vorrichtung 102 ist dazu ausgebildet, das hier vorgestellte Verfahren auszuführen. Das Fahrzeug 100 ist ein zweirädriges Fahrzeug 100 mit einem elektrischen Direktantrieb. Das Fahrzeug 100 kann beispielsweise ein Scooter sein. Das Fahrzeug 100 kann auch ein Dreirad sein. Die Vorrichtung 102 stabilisiert ein angetriebenes Rad 104, d.h. im dargestellten Fall ein Hinterrad des Fahrzeugs 100, während eines elektrischen Bremsvorgangs, also einer Rekuperation. Bei der Rekuperation wird Bewegungsenergie des Fahrzeugs 100 unter Verwendung eines generatorisch betriebenen Antriebsmotors 106 des Fahrzeugs 100 in elektrische Energie umgewandelt und in einem Energiespeicher des Fahrzeugs 100 gespeichert. Der Antriebsmotor 106 ist hier ein Zentralmotor und über eine feste Übersetzung mit dem Rad 104 gekoppelt. Alternativ kann der Antriebsmotor 106 auch als in das Rad 104 integrierter Nabenmotor ausgeführt sein.

Die Rekuperation wird beispielsweise durch Betätigen eines Bremshebels 107 des Fahrzeugs 100 ausgelöst und ein insbesondere zu einer am Bremshebel 107 aufgebrachten Kraft proportionales Bremssignal 108 an ein Steuergerät 110 des Antriebsmotors 106 gesendet. Ansprechend auf das Bremssignal wird einem Rotor 109 des Antriebsmotors 106 durch das Steuergerät 110 ein Rekuperationsmoment 112 vorgegeben und es wirkt ein Bremsmoment 114 an dem mit dem Antriebsmotor 106 gekoppelten Rad 104. Das Fahrzeug 100 wird verzögert.

Wenn das Bremsmoment 114 zu groß ist beziehungsweise ein Reibwert eines Untergrunds unter dem Rad 104 zu klein ist, verliert das Rad 104 seine Haftung auf dem Untergrund und fängt an zu blockieren. Wenn das Rad 104 blockiert können auch so gut wie keine Seitenführungskräfte mehr vom Rad 104 auf den Untergrund übertragen werden. Dadurch werden das Rad 104 und letztlich das ganze Fahrzeug 100 instabil.

Um dem entgegenzuwirken, wird bei dem hier vorgestellten Ansatz unter Verwendung eines Drehzahlgradienten 116 des rekuperierenden Antriebsmotors 106 beziehungsweise des Rotors 109 ein Skalierungsfaktor 118 für das Rekuperationsmoment 112 aus einer Rekuperationskennlinie 120 ausgelesen. Der Skalierungsfaktor 118 wird an das Steuergerät 110 ausgegeben, um das Rad 104 zu stabilisieren. Das Steuergerät 110 reduziert das Rekuperationsmoment 112 entsprechend des Skalierungsfaktors 118.

Das Rad 104 benötigt kurze Zeit zum Stabilisieren. Nach beispielsweise 30 Millisekunden bis 50 Millisekunden oder aber nach der Dauer der Radblockade wird das Rekuperationsmoment 112 wieder erhöht und der Vorgang läuft erneut ab.

In einem Ausführungsbeispiel ist der Antriebsmotor 106 ein Asynchronmotor und der der Drehzahlgradient 116 wird aus einer Drehzahl 122 des Antriebsmotors 106 hergeleitet. Die Drehzahl 122 kann beispielsweise durch ein Drehzahlsignal 124 des Steuergeräts 110 bereitgestellt werden.

In einem Ausführungsbeispiel ist der Antriebsmotor 106 ein Synchronmotor und die Drehzahl 122 wird aus einem Winkelsignal 126 des Antriebsmotors 106 hergeleitet. Das Winkelsignal 126 wird durch einen Rotorlagegeber 128 des Antriebsmotors 106 erzeugt. Das Winkelsignal 126 wird von dem Steuergerät 110 verwendet, um die Wicklungen des Antriebsmotors 106 zu bestromen. Falls das angetrieben Rad oder die Bremsscheibe mit einem Drehzahlsignalgeber ausgestattet ist, kann dieser Drehzahlsignalgeber ebenfalls genutzt werden, um den Drehzahlgradienten 116 zu ermitteln.

In einem Ausführungsbeispiel wird unter Verwendung einer Fahrzeuggeschwindigkeit 130 des Fahrzeugs 100 die Rekuperationskennlinie 120 aus einem Rekuperationskennfeld 132 ausgewählt. Der Skalierungsfaktor 118 wird dann unter Verwendung des Drehzahlgradienten 116 aus der ausgewählten Rekuperationskennlinie 120 ausgelesen.

Die Fahrzeuggeschwindigkeit 130 kann beispielsweise von einem GPS-Gerät 134 oder einem Tacho 136 des Fahrzeugs 100 bereitgestellt werden. Alternativ kann die Fahrzeuggeschwindigkeit 130 direkt aus der Drehzahl 122 abgeleitet werden, da der Antriebsmotor 106 über die feste Übersetzung mit dem Rad 104 gekoppelt ist.

In einem Ausführungsbeispiel weist das Rekuperationskennfeld 132 mehrere Spalten auf. In jeder Spalte ist eine Rekuperationskennlinie 120 als Abfolge von Stützstellen hinterlegt. Jede Stützstelle ist dabei in einer Zelle des Rekuperationskennfelds 132 hinterlegt. Jede Zelle ist durch ein Wertepaar aus Fahrzeuggeschwindigkeit 130 und Drehzahlgradient 116 definiert. In der Zelle ist ein Wert der Stützstelle hinterlegt. Bei Zwischenwerten der Fahrzeuggeschwindigkeit 130 und des Drehzahlgradienten 116 wird der Wert der Stützstelle zwischen den Zellen interpoliert.

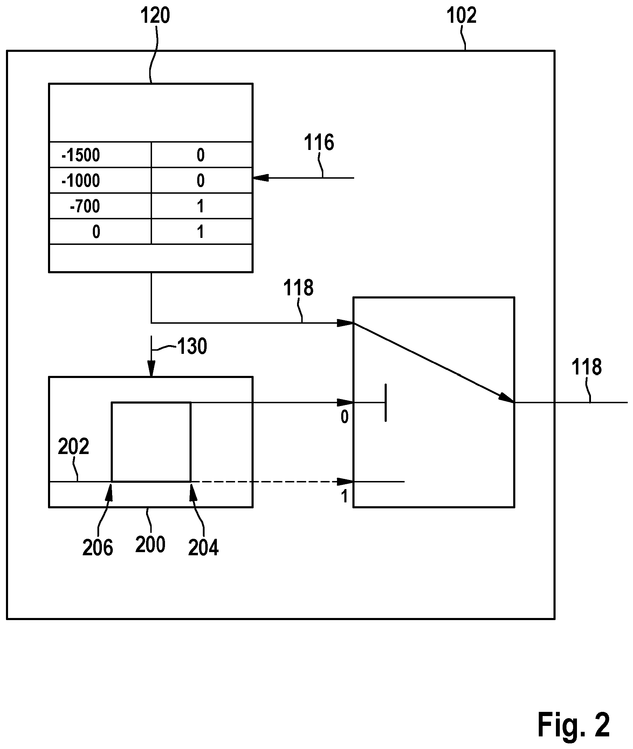

Fig. 2 zeigt ein Ablaufdiagramm einer weiteren Umsetzung eines Verfahrens zum Stabilisieren gemäß einem Ausführungsbeispiel. Das Verfahren kann beispielsweise auf einer Vorrichtung 102, wie in Fig. 1 ausgeführt werden. Hier wird unter Verwendung einer Geschwindigkeitshysterese 200 entschieden, ob der unter Verwendung des Drehzahlgradienten 116 beziehungsweise einer Winkelbeschleunigung des Rotors aus der Rekuperationskennlinie 120 ausgelesene Skalierungsfaktor 118 zum Limitieren des Rekuperationsmoments verwendet wird oder nicht.

Die Fahrzeuggeschwindigkeit 130 wird durch die Geschwindigkeitshysterese 200 ausgewertet. Dabei wechselt ein Logikwert 202 von "nein" zu "ja", wenn die Fahrzeuggeschwindigkeit 130 größer als ein oberer Grenzwert der Geschwindigkeitshysterese 200 wird. Der obere Grenzwert kann als Stabilisierungsgeschwindigkeit 204 bezeichnet werden. Wenn die Fahrzeuggeschwindigkeit 130 kleiner als ein unterer Grenzwert der Geschwindigkeitshysterese 200 wird, wechselt der Logikwert 202 von "ja" zu "nein". Der untere Grenzwert kann als Schrittgeschwindigkeit 206 bezeichnet werden.

Wenn der Logikwert 202 "ja" ist, wird der Skalierungsfaktor 118 verwendet. Wenn der Logikwert 202 "nein" ist, wird der Skalierungsfaktor 118 nicht verwendet.

Das vorgestellte Verfahren sowie die zu dessen Implementierung eingesetzte Vorrichtung können insbesondere bei technisch eher einfach konstruierten Fahrzeugen wie Scootern, bei denen ein erheblicher Kostendruck oft einen Einsatz teurer ABS-Systeme verhindert, ermöglichen, eine in vielen Fällen ausreichende ABS-Funktion beim Rekuperieren zu implementieren, ohne hierfür erhebliche zusätzliche Hardware bereitstellen zu müssen.

Mit anderen Worten wird ein E-Motor ABS für zweirädrige und dreirädrige Fahrzeuge vorgestellt.

Im Bereich der individuellen Mobilität werden Elektro- und Hybridfahrzeuge immer populärer. Für elektrisch betriebene zweirädrige und dreirädrige Fahrzeuge gilt das, insbesondere für China, Indien und die ASEAN-Staaten. In Europa zeigen sich ebenfalls im mehr Start-ups und Hersteller, die elektrisch angetriebene Zweiräder und Dreiräder anbieten. All diesen elektrischen Fahrzeugen ist gemein, dass während eines Bremsvorgangs die kinetische Energie des Fahrzeugs durch eine geeignete Ansteuerung des Elektromotors in elektrische Energie umgewandelt und in der sogenannten Traktionsbatterie gespeichert werden kann. Dieser Vorgang wird Rekuperation oder regeneratives Bremsen genannt.

Fahrphysikalisch beschreibt die Rekuperation einen Bremsvorgang. Bei einem Bremsvorgang auf nasser oder glatter Fahrbahn kann es zum Blockieren der Räder kommen. Das Blockieren der Räder ist ein fahrdynamisch hochkritischer Effekt. Aus diesem Grund ist seit vielen Jahren ABS und/oder ESP eine gesetzliche Vorgabe im PKW-Bereich. Für viele zweirädrige oder dreirädrige Fahrzeuge gelten diese gesetzliche Vorgaben nicht, insbesondere außerhalb Europas sind solche System oftmals nicht gesetzlich gefordert. Zusätzlich können die Kosten für solche Sicherheitssysteme (ABS, ESP) im Vergleich zu den Gesamtkosten eines elektrischen Zweirads exorbitant teuer sein. Daher wird hier ein ABS-Derivat vorgestellt, welches basierend auf dem Drehzahlsignal des Elektromotors eine "ABS-ähnliche" Funktion für ein elektrisches Zweirad oder Dreirad ermöglicht.

Je nach Konzept des Zweirads oder Dreirads ist der Elektroantriebsmotor ein sogenannter Hub-Motor (=Radnabenmotor), dessen Drehzahl direkt proportional zur Fahrzeuggeschwindigkeit ist. Andere Motorkonzepte, sogenannte Zentralmotorkonzepte verbinden den Elektromotor und das Antriebsrad mittels eines oder mehrerer Riemen oder mit Hilfe eines Getriebes.

Bei einem klassischen ABS wird die Drehzahl des Rades mit Hilfe von Raddrehzahlsensoren ermittelt und für die korrekte Betätigung des ABS genutzt. Zur Ansteuerung eines Elektromotors wird ein hochgenaues Winkelsignal benötigt. Durch eine mathematische Differentiation des Winkelsignals kann eine Drehzahl des Elektromotors berechnet oder ermittelt werden. Sowohl für Radnabenantriebe als auch für Antriebe mit Zentralmotor kann die Drehzahl des Elektromotors genutzt werden, um die Blockade des Antriebsrads während der Rekuperation vorherzusagen. Wird eine mögliche Blockade des Antriebsrads erkannt, kann die Rekuperation (also das elektrische Bremsen) sofort beendet werden, um eine fahrdynamisch gefährliche Situation zu vermeiden.

Zunächst wird aus dem Winkelsignal, welches der Rotorlage-Geber ermittelt, die Drehzahl des Elektromotors bestimmt. Aus der Drehzahl des Elektromotors wird dann mit dem gleichen oder einem ähnlichen Algorithmus der sogenannte Drehzahlgradient, also die Änderung der Elektromotor-Drehzahl in Abhängigkeit der Zeit, ermittelt. Insbesondere die Änderung der Drehzahl, also der Drehzahlgradient kann als Indikator für ein kurz bevorstehendes Blockieren des Rads genutzt werden.

Aus einer Kombination aus Drehzahlen und Drehzahlgradienten kann eine Matrix erzeugt werden, anhand derer eine Reduzierung der Rekuperation berechnet oder ermittelt werden kann. Eine solche Matrix beziehungsweise Rekuperationskennfeld kann dabei beispielsweise aussehen wie in Fig. 1

In Fig. 1 ist eine Signalkette von einem Winkelsignal zu einer Drehzahl und einem Drehzahlgradient dargestellt. Zusätzlich ist in Fig. ein 3D-Rekuperationskennfeld und eine Limitierung des Rekuperationsmoments dargestellt.

Dabei wird z.B. bei einer Drehzahl von 2000 rpm und einem Drehzahlgradienten von -700 rpm/s ein Skalierungsfaktor von "1" aus dem Kennfeld ermittelt. Durch eine Multiplikation dieses Faktors mit dem Rekuperationsmoment ergibt sich somit ein "limitiertes" Rekuperationsmoment, welches in diesem Fall identisch mit dem ursprünglichen Rekuperationsmoment ist.

Für ein Drehzahlsignal von 1000 rpm und einem Drehzahlgradientensignal von - 1500 rpm/s ergibt sich ein Skalierungsfaktor von "0". In diesem Fall ist das "limitierte" Rekuperationsmoment hier gleich 0. Die Rekuperation ist dann abgeschaltet.

In dem Ausführungsbeispiel von Fig. 2 ist das E-Motor ABS nur oberhalb einer vordefinierbaren Geschwindigkeit aktiv. Diese Aktivierung kann z.B. mit Hilfe einer Hysteresekennline gesteuert werden. Über eine solche Hysteresekennlinie kann die Aktivierung und die Deaktivierung des E-Motor ABS sehr robust und ohne ein kontinuierliches Hin- und Herspringen zwischen dem aktivierten und dem deaktivierten Zustand angesteuert werden.

Liegt die Fahrzeuggeschwindigkeit unterhalb der unteren Grenze der Hysterese, wird in dem der Hysterese nachgelagerten Schalter der No-Pfad aktiv und der Skalierungsfaktor für die Rekuperation zu 1 gesetzt und somit folglich das E-Motor ABS deaktiviert. Ist die Fahrzeuggeschwindigkeit hingegen größer als die obere Grenze der Hysterese, wird der Yes-Pfad des Schalters aktiv und der Skalierungsfaktor der Rekuperation ergibt sich aus der Rekuperationskennlinie, die in Abhängigkeit des Drehzahlgradienten oder der Winkelbeschleunigung der E-Maschine einen Wert zwischen 0 und 1 annehmen kann.

Dabei wird z.B. bei einem Drehzahlgradienten von -700 rpm/s ein Skalierungsfaktor von "1" aus dem Kennfeld ermittelt. Über die Multiplikation dieses Faktors mit dem Rekuperationsmoment ergibt sich somit ein "limitiertes" Rekuperationsmoment, welches in diesem Fall identisch mit dem ursprünglichen Rekuperationsmoment ist.

Für ein Drehzahlgradientensignal von -1500 rpm/s ergibt sich ein Skalierungsfaktor von "0". In diesem Fall ist das "limitierte" Rekuperationsmoment gleich 0. Die Rekuperation ist dann abgeschaltet.

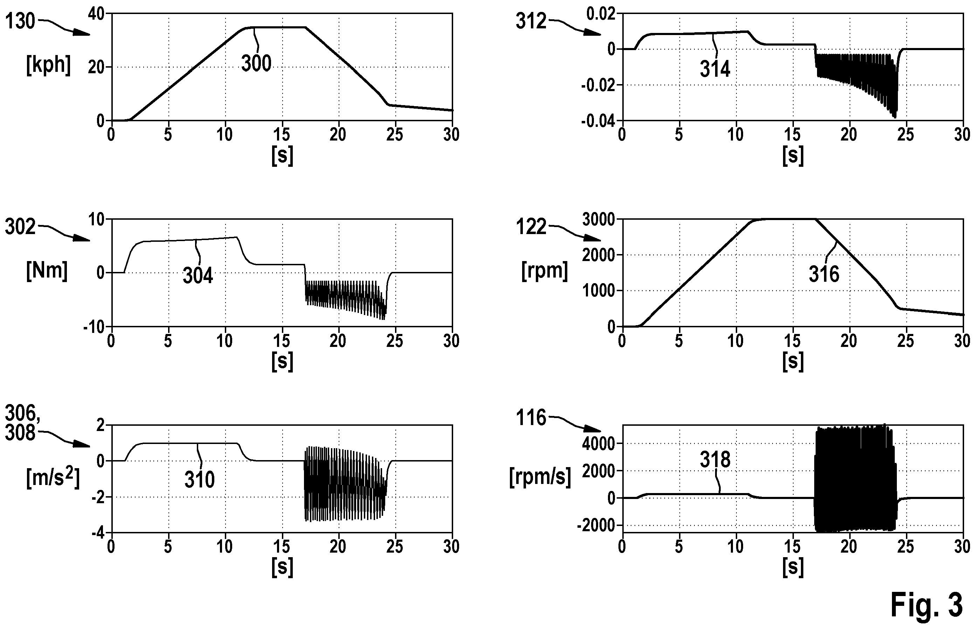

In Fig. 3 ist ein Beispiel für eine Fahrsituation mit einem solchen elektrischen ABS mit Rekuperation dargestellt.

Fig. 3 zeigt eine Darstellung einer Fahrsituation des Fahrzeugs aus Fig. 1. Die Fahrsituation wird durch sechs Diagramme abgebildet. Die Diagramme haben auf ihren Abszissen jeweils die Zeit t von null Sekunden bis 30 Sekunden aufgetragen. Das erste Diagramm hat auf seiner Ordinate die Fahrzeuggeschwindigkeit 130 aufgetragen und bildet damit einen Geschwindigkeitsverlauf 300 der Fahrsituation ab. Das zweite Diagramm hat auf seiner Ordinate ein Drehmoment 302 des Antriebsmotors angetragen und bildet damit einen Drehmomentverlauf 304 der Fahrsituation ab. Das dritte Diagramm hat auf seiner Ordinate eine Reifenbeschleunigung 306 und eine Fahrzeugbeschleunigung 308 angetragen. Das dritte Diagramm bildet damit zwei Beschleunigungsverläufe 310 der Fahrsituation ab. Das vierte Diagramm hat auf seiner Ordinate einen Reifenschlupf 312 angetragen und bildet somit einen Schlupfverlauf 314 der Fahrsituation ab. Das fünfte Diagramm hat auf seiner Ordinate eine Die Drehzahl 122 angetragen und bildet somit einen Drehzahlverlauf 316 des Antriebsmotors ab. Das sechste Diagramm hat auf seiner Ordinate den Drehzahlgradienten 116 angetragen und bildet somit einen Drehzahlgradientenverlauf 318 der Fahrsituation ab.

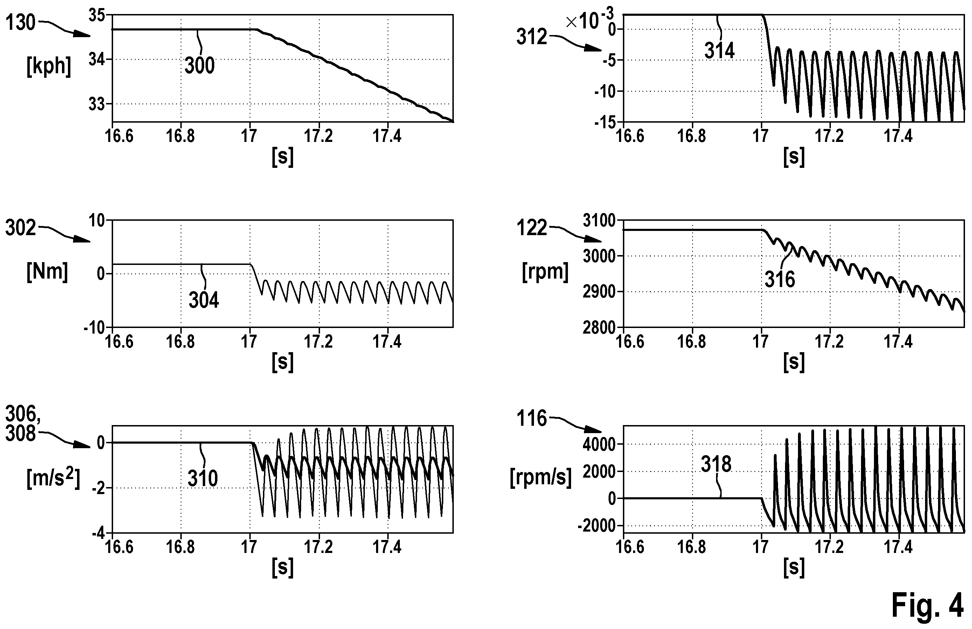

Fig. 4 zeigt eine Detaildarstellung einer Fahrsituation gemäß einem Ausführungsbeispiel. Die Detaildarstellung wird ebenfalls durch sechs Diagramme abgebildet. Die Diagramme haben auf ihren Abszissen jeweils die Zeit t aus Fig. 3 von 16,6 Sekunden bis 17,6 Sekunden aufgetragen.

Das Fahrzeug beschleunigt auf eine Geschwindigkeit von 35 km/h, bei Sekunde 17 beginnt die Rekuperation. In der vergrößerten Darstellung in Fig. 4 ist zu sehen, dass durch die Abhängigkeit von Drehzahlgradient und Drehzahl und dem bereits beschriebenen Skalierungsfaktor eine Variation des Drehmoments des Elektromotors 304 erzeugt wird, die den Reifenschlupf 312 auf Werte im Bereich von -0.015 limitiert. Schlupfwerte kleiner als -0.2 können sehr schnell zu einem blockierten Rad führen.

Wird das Rekuperationsmoment 112 nicht begrenzt, kann es schlagartig zu einem instabilen Fahrzustand kommen.

Diese Art eines elektrischen ABS kann für alle elektrische angetriebenen Zweiräder und Dreiräder angewendet werden und führt dort zu einer maximal möglichen Ausnutzung des Rekuperationspotentials als auch für ein sicheres Fahrvergnügen mit elektrischen Rollern und Rickshaws.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Stabilisieren eines Rads (104) eines zweirädrigen oder dreirädrigen Fahrzeugs (100) während einer Rekuperation, wobei unter Verwendung eines Drehzahlgradienten (116) eines rekuperierenden Antriebsmotors (106) des Rads (104) ein Skalierungsfaktor (118) für ein Rekuperationsmoment (112) des Antriebsmotors (106) aus einer Rekuperationskennlinie (120) ausgelesen wird und das Rekuperationsmoment (112) unter Verwendung des Skalierungsfaktors (118) eingestellt wird, um das Rad (104) zu stabilisieren, **dadurch gekennzeichnet, dass** der Skalierungsfaktor verwendet wird, wenn eine Geschwindigkeit des Fahrzeugs größer als ein oberer Grenzwert einer Geschwindigkeitshysterese wird und der Skalierungsfaktor nicht verwendet wird, wenn die Geschwindigkeit des Fahrzeugs kleiner als ein unterer Grenzwert der Geschwindigkeitshysterese wird.

2. Verfahren gemäß Anspruch 1, **dadurch gekennzeichnet, dass** der untere Grenzwert der Geschwindigkeitshysterese eine Schrittgeschwindigkeit (206) ist.

3. Verfahren gemäß einem der vorhergehenden Ansprüche, bei dem unter Verwendung einer Fahrzeuggeschwindigkeit (130) des Fahrzeugs (100) die Rekuperationskennlinie (120) aus einem Rekuperationskennfeld (132) ausgewählt wird, und der Skalierungsfaktor (118) unter Verwendung des Drehzahlgradienten (116) aus der ausgewählten Rekuperationskennlinie (120) ausgelesen wird.

4. Verfahren gemäß einem der Ansprüche 2 bis 3, bei dem die Fahrzeuggeschwindigkeit (130) von einem Satellitennavigationssystem (134) des Fahrzeugs (100) eingelesen wird.

5. Verfahren gemäß einem der Ansprüche 2 bis 3, bei dem die Fahrzeuggeschwindigkeit (130) aus einer Drehzahl (122) des Antriebsmotors (106) abgeleitet wird.

6. Verfahren gemäß Anspruch 5, bei dem die Drehzahl (122) unter Verwendung eines Winkelsignals (126) des Antriebsmotors (106) bestimmt wird.

7. Verfahren gemäß einem der Ansprüche 5 bis 6, bei dem der Drehzahlgradient (116) aus der Drehzahl (122) abgeleitet wird.

8. Verfahren gemäß einem der vorhergehenden Ansprüche, bei dem die Rekuperationskennlinie (120) in einer Tabelle als Abfolge von Stützstellen hinterlegt ist, wobei zum Auslesen des Skalierungsfaktors (118) zwischen den Stützstellen interpoliert wird.

9. Vorrichtung (102), wobei die Vorrichtung (102) dazu ausgebildet ist, das Verfahren gemäß einem der vorhergehenden Ansprüche in entsprechenden Einrichtungen auszuführen.

10. Computerprogrammprodukt, das dazu eingerichtet ist, einen Prozessor bei Ausführung des Computerprogrammprodukts dazu anzuleiten, das Verfahren gemäß einem der Ansprüche 1 bis 8 auszuführen, umzusetzen und/oder anzusteuern.

11. Maschinenlesbares Speichermedium, auf dem das Computerprogrammprodukt gemäß Anspruch 10 gespeichert ist.

## Claims

1. Method for stabilizing a wheel (104) of a two-wheeled or three-wheeled vehicle (100) during recuperation, wherein a rotational speed gradient (116) of a recuperating drive motor (106) of the wheel (104) is used to read out a scaling factor (118) for a recuperation torque (112) of the drive motor (106) from a recuperation characteristic curve (120), and the recuperation torque (112) is set using the scaling factor (118) in order to stabilize the wheel (104), **characterized in that** the scaling factor is used when a speed of the vehicle becomes greater than an upper limit value of a speed hysteresis and the scaling factor is not used when the speed of the vehicle becomes less than a lower limit value of the speed hysteresis.

2. Method according to Claim 1, **characterized in that** the lower limit value of the speed hysteresis is a walking speed (206).

3. Method according to one of the preceding claims, in which the recuperation characteristic curve (120) is selected from a recuperation family of characteristics (132) using a vehicle speed (130) of the vehicle (100), and the scaling factor (118) is read out from the selected recuperation characteristic curve (120) using the rotational speed gradient (116).

4. Method according to one of Claims 2 to 3, in which the vehicle speed (130) is read in by a satellite navigation system (134) of the vehicle (100).

5. Method according to one of Claims 2 to 3, in which the vehicle speed (130) is derived from a rotational speed (122) of the drive motor (106).

6. Method according to Claim 5, in which the rotational speed (122) is determined using an angle signal (126) from the drive motor (106).

7. Method according to one of Claims 5 to 6, in which the rotational speed gradient (116) is derived from the rotational speed (122).

8. Method according to one of the preceding claims, in which the recuperation characteristic curve (120) is stored in a table as a sequence of supporting points, wherein interpolation between the supporting points is carried out in order to read out the scaling factor (118).

9. Apparatus (102), wherein the apparatus (102) is designed to carry out the method according to one of the preceding claims in corresponding devices.

10. Computer program product which is configured to instruct a processor to carry out, implement and/or control the method according to one of Claims 1 to 8 when executing the computer program product.

11. Machine-readable storage medium on which the computer program product according to Claim 10 is stored.

## Revendications

1. Procédé pour stabiliser une roue (104) d'un véhicule à deux roues ou à trois roues (100) pendant une régénération, dans lequel, à l'aide d'un gradient de vitesse (116) d'un moteur d'entraînement régénératif (106) de la roue (104), un facteur d'échelle (118) destiné à un couple de régénération (112) du moteur d'entraînement (106) est extrait d'une courbe caractéristique de régénération (120), et le couple de régénération (112) est défini à l'aide du facteur d'échelle (118) de façon à stabiliser la roue (104), **caractérisé en ce que** le facteur d'échelle est utilisé lorsqu'une vitesse du véhicule devient supérieure à une limite supérieure d'une hystérésis de vitesse et **en ce que** le facteur d'échelle n'est pas utilisé lorsque la vitesse du véhicule devient inférieure à une limite inférieure de l'hystérésis de vitesse.

2. Procédé selon la revendication 1, **caractérisé en ce que** la limite inférieure de l'hystérésis de vitesse est une vitesse de marche (206).

3. Procédé selon l'une des revendications précédentes, dans lequel la courbe caractéristique de régénération (120) est sélectionnée dans un champ caractéristique de régénération (132) à l'aide d'une vitesse de véhicule (130) du véhicule (100), et le facteur d'échelle (118) est extrait de la courbe caractéristique de régénération (120) sélectionnée à l'aide du gradient de vitesse (116).

4. Procédé selon l'une des revendications 2 à 3, dans lequel la vitesse de véhicule (130) est lue à partir d'un système de navigation par satellite (134) du véhicule (100).

5. Procédé selon l'une des revendications 2 à 3, dans lequel la vitesse de véhicule (130) est dérivée d'une vitesse de rotation (122) du moteur d'entraînement (106).

6. Procédé selon la revendication 5, dans lequel la vitesse de rotation (122) est déterminée à l'aide d'un signal d'angle (126) du moteur d'entraînement (106).

7. Procédé selon l'une des revendications 5 à 6, dans lequel le gradient de vitesse (116) est dérivé de la vitesse de rotation (122).

8. Procédé selon l'une des revendications précédentes, dans lequel la courbe caractéristique de régénération (120) est stockée dans un tableau sous forme d'une séquence de points d'appui, une interpolation étant effectuée entre les points d'appui pour extraire le facteur d'échelle (118).

9. Dispositif (102), le dispositif (102) étant conçu pour mettre en œuvre le procédé selon l'une des revendications précédentes dans des moyens correspondants.

10. Produit de programme d'ordinateur conçu pour amener un processeur, lors de l'exécution du produit programme d'ordinateur, à exécuter, mettre en œuvre et/ou commander le procédé selon l'une des revendications 1 à 8.

11. Support de stockage lisible par machine sur lequel est stocké le produit de programme d'ordinateur selon la revendication 10.
